# EUROPÄISCHE PATENTSCHRIFT

(11) **EP 3 129 645 B1**
(45) Veröffentlichungstag und Bekanntmachung des Hinweises auf die Patenterteilung: **13.10.2021**
(21) Anmeldenummer: 15714194.6
(22) Anmeldetag: 31.03.2015
(51) Int. Cl.: F03D 1/06, F03D 13/00

(54) **VERFAHREN ZUM ANBRINGEN EINER ZACKENHINTERKANTE AN EINER BLATTHINTERKANTE EINES ROTORBLATTES**
METHOD FOR ATTACHING A TOOTHED REAR EDGE TO A BLADE REAR EDGE OF A ROTOR BLADE
PROCÉDÉ DE MONTAGE D'UN BORD DE FUITE DENTELÉ SUR UN BORD DE FUITE D'UNE PALE DE ROTOR

(30) Priorität: 02.04.2014 DE 102014206345
(43) Veröffentlichungstag der Anmeldung: 15.02.2017
(73) Patentinhaber: Wobben Properties GmbH, 26607 Aurich (DE)
(72) Erfinder: KUHN, Marvin, 26180 Rastede (DE)
(74) Vertreter: Eisenführ Speiser
(86) Internationale Anmeldenummer: PCT/EP2015/056968
(87) Internationale Veröffentlichungsnummer: WO 2015/150358

(56) Entgegenhaltungen:
- EP-A2- 2 667 019
- DE-A1-102008 007 908
- DE-A1-102011 051 329
- DE-A1-102011 052 930
- DE-A1-102012 109 989
- US-A1- 2012 141 277
- US-A1- 2014 072 440
- None

## Beschreibung

Die vorliegende Erfindung betrifft ein Verfahren zum Anbringen einer Zackenhinterkante an eine Blatthinterkante eines Rotorblatts. Außerdem betrifft die vorliegende Erfindung ein Rotorblatt mit einer Zackenhinterkante. Die Erfindung betrifft auch eine Windenergieanlage mit wenigstens einem Rotorblatt mit einer Zackenhinterkante.

Zackenhinterkanten für Rotorblätter von Windenergieanlagen, besonders so genannte Horizontalachsen-Windenergieanlagen, sind bekannt, siehe z. B. DE 10 2012 109989 A1. Sie werden an der Blatthinterkante des Rotorblattes zumindest in einem Abschnitt angeordnet und bilden dann dort im Grunde die neue Hinterkante des Rotorblattes. Diese neue Hinterkante, also diese Zackenhinterkante, schafft somit eine gezackte Kontur insbesondere mit langen spitzen Zacken, wodurch das aerodynamische Verhalten in diesem Bereich beeinflusst wird. Für solche Zackenhinterkanten wird auch allgemein der Betriff "Serrations" verwendet.

Es hat sich gezeigt, dass solche Serrations das aerodynamische Verhalten der Rotorblätter positiv beeinflussen können, so dass heutzutage zunehmend Rotorblätter mit solchen Serrations gebaut werden. Für ältere Windenergieanlagen ist es wünschenswert, solche nachzurüsten. Bei Rotorblättern, die im Bereich ihrer Hinterkante einen innen entlang der Hinterkante verlaufenden Hohlraum aufweisen, kann dieser aufgesägt werden und eine solche Zackenhinterkante in die dadurch entstehende Öffnung gesteckt werden. Eine andere Möglichkeit besteht darin, die gezackte Hinterkante als etwa V-förmiges Profil vorzusehen, um sie mit der V-förmigen Öffnung auf die bisherige Hinterkante des Rotorblattes aufzustecken. Diese bisherige Hinterkante müsste dafür entsprechend an Druck-und Saugseite angefräst werden, um eine Anpassung an dieses Profil zu schaffen. Beispielsweise zeigt die deutsche Patentanmeldung DE 197 43 694 A1 in der Fig. 1 ein solches V-förmiges Profil, allerdings nicht für eine Zackenhinterkante, sondern für eine Hinterkante ohne Zacken.

Sofern die beschriebenen Voraussetzungen, wie der längs verlaufende Hohlraum, nicht gegeben sind oder der Aufwand zum Nachrüsten einer solchen Zackenhinterkante besonders aus Kosten- und Zeitgründen gering gehalten werden soll, können die oben beschriebenen Verfahren zum Nachrüsten ungünstig sein.

Der vorliegenden Erfindung liegt somit die Aufgabe zugrunde, zumindest eines der oben genannten Probleme zu adressieren. Insbesondere soll eine möglichst einfache und kostengünstige Variante gefunden werden, eine Zackenhinterkante an einem Rotorblatt nachzurüsten. Zumindest soll eine zu den bisher bekannten Lösungen alternative Lösung vorgeschlagen werden.

Das Deutsche Patent- und Markenamt hat in der Prioritätsanmeldung zu vorliegender PCT-Anmeldung folgenden Stand der Technik recherchiert: DE 197 43 694 A1, DE 10 2008 007 908 A1, DE 10 2011 052 930 A1, DE 10 2012 109 989 A1, EP 2 667 019 A2 und WO 2014/ 048 437 A1.

Erfindungsgemäß wird ein Verfahren gemäß Anspruch 1 vorgeschlagen. Demnach wird eine Zackenhinterkante als ansetzbares Bauteil verwendet, die einen Befestigungsabschnitt und natürlich auch einen Zackenabschnitt aufweist. Der Befestigungsabschnitt bildet im Grunde auch eine gemeinsame Basis oder einen Teil einer gemeinsamen Basis, über die die einzelnen Zacken miteinander verbunden sind.

Mit diesem Befestigungsabschnitt wird die Zackenhinterkante, also dieses Bauteil dann an der Oberfläche der Blatthinterkante befestigt. Das Befestigen der Zackenhinterkante im Bereich dieses Befestigungsabschnitts an dem Rotorblatt erfolgt mittels Klebstoff. Insoweit kann die Zackenhinterkante auf einfache Art und Weise angeordnet und befestigt werden.

Die Zackenhinterkante wird hierbei an der Saugseite des Rotorblattes angeordnet und befestigt. Dazu ergänzend wird ein überdeckender Materialstreifen an der Druckseite angeordnet, um dadurch die Zackenhinterkante zusätzlich zu fixieren. Dieser Materialstreifen wird so an der Druckseite und zur Zackenhinterkante angeordnet, dass er den Übergang zwischen Blatthinterkante und Zackenhinterkante überdeckt. Die Blatthinterkante ist hierbei die bisherige Hinterkante, also die Hinterkante, bevor die Zackenhinterkante angesetzt wurde. Durch diese Überdeckung erfolgt eine feste Verbindung zwischen der Zackenhinterkante nicht nur zur Saugseite, sondern auch zur Druckseite. Dieser überdeckende Materialstreifen schafft somit eine zusätzliche Stabilisierung und dieser Materialstreifen bildet zusammen mit der Zackenhinterkante im Grunde eine V-förmige Struktur. Diese V-förmige Struktur wirkt dann im Grunde wie von hinten auf die Blatthinterkante aufgesetzt.

Alternativ kann die Zackenhinterkante auch an der Druckseite aufgesetzt werden und entsprechend mit dem Materialstreifen an der Saugseite weiter fixiert werden, wie oben zur Druckseite beschrieben wurde. Meist passt sich die Zackenhinterkante aber besser an die Strömungsverhältnisse des Blattes an, wenn sie auf der Saugseite angeordnet ist und insbesondere im Wesentlichen die Oberfläche der Saugseite nach hinten verlängert.

Vorzugsweise wird die Zackenhinterkante an der Blattoberfläche der Blatthinterkante mittels Doppelklebeband befestigt. Die Verklebung zwischen Zackenhinterkante und Blattoberfläche kann also auf einfache Art und Weise durch Anordnung von Doppelklebeband erreicht werden. Hierbei wurde erkannt, dass die Verwendung eines Doppelklebebandes die gewünschte Stabilität schaffen kann. Zum einen wurde erkannt, dass die Blattoberfläche und die Oberfläche des Befestigungsabschnitts der Zackenhinterkante sehr eben und flach ausgestaltet sind und auch in der Gesamtheit eine große Fläche schaffen. Durch diese große Fläche lässt sich durch Verwendung des Doppelklebebandes eine insgesamt starke Haftung erreichen. Es kommt hinzu, dass durch die Verwendung eines Doppelklebebandes eine gleichmäßig dicke Klebeschicht bereitgestellt wird. Auch dies berücksichtigt die erkannte Tatsache, dass hier zwei große ebene Oberflächen miteinander verklebt werden.

Der Materialstreifen ist formstabil und insbesondere als Kunststoffprofil ausgebildet. Hierbei kann er an die Form des Übergangsbereichs zwischen Rotorblatt und Zackenhinterkante angepasst sein. Hierdurch wird nicht nur eine Fixierung und Verbesserung der Befestigung der Zackenhinterkante an dem Rotorblatt geschaffen, sondern auch eine Stabilisierung der Zackenhinterkante. Dies kann auch die Vermeidung von Schwingungen positiv beeinflussen.

Es wird gemäß einer Ausführungsform vorgeschlagen, dass der Materialstreifen mittels Klebstoff, insbesondere Doppelklebeband, den Übergang zwischen Blatthinterkante und Zackenhinterkante überdeckend aufgeklebt ist. Im Grunde wird der Materialstreifen hier unmittelbar an diesen Übergangsbereich angesetzt und sowohl mit Blatthinterkante als auch Zackenhinterkante verklebt. Auch bei der Verwendung von Doppelklebeband kann hier jeweils ein Doppelklebeband für den jeweiligen Bereich vorgesehen sein, also eines für die Befestigung an der Blatthinterkante und eines für die Befestigung an der Zackenhinterkante. Alternativ kann auch ein einziges Doppelklebeband vorgesehen sein. Hierunter fällt auch, das Doppelklebeband in seiner Länge gegebenenfalls zu stückeln, z.B. in Meterabständen. Der Materialstreifen wird also hier möglichst passgenau in diesen Übergangsbereich eingesetzt. Dabei ist zu beachten, dass dieser Übergangsbereich zwischen Blatthinterkante und Zackenhinterkante im Grunde winkelig ausgestaltet ist. Genau an diesen winkeligen Übergang wird dieser Materialstreifen vorzugsweise angepasst.

Das Aufkleben kann auch mittels Spachtelmasse erfolgen. Durch diese Spachtelmasse kann ein Teil des Übergangs ausgefüllt werden und die Spachtelmasse kann beim Ansetzen des Materialstreifens auch als Ausgleichsmasse fungieren. Außerdem kann das Anspachteln auch im Bereich der Kanten des Materialstreifens vorgenommen werden, um dort eine wenn auch geringe Stufe, also den Übergang von dem Materialstreifen zur entsprechenden Oberfläche des Rotorblattes bzw. der Zackenhinterkante, auszugleichen.

Alternativ oder zusätzlich zu der Verwendung von Spachtelmasse kann eine dauerelastische PU Dichtmasse (z.B. Terostat MS 930) verwendet werden. Die dauerelastische PU Dichtmasse kann genauso verwendet werden wie die oben beschriebene Spachtelmasse.

Vorzugsweise unterscheidet sich die Befestigung des Materialstreifens an dem Rotorblatt zu der Befestigung des Materialstreifens an der Zackenhinterkante. Die Unterscheidung kann besonders darin liegen, dass unterschiedliche Klebstoffe verwendet werden. Hierunter fallen auch unterschiedliche Spachtelmassen oder Harze (oder dauerelastische PU Dichtmasse), die hier ebenfalls als Klebstoffe wirken. Es können auch unterschiedliche Doppelklebebänder verwendet werden oder beispielsweise nur für jeweils einen der beiden Bereiche ein Doppelklebeband verwendet werden. Hierdurch kann erreicht werden, dass sich die Verklebung an das Material des Rotorblatts bzw. Hinterkante anpassen kann. Es kann auch erreicht werden, dass beispielsweise bei der Verklebung zur Zackenhinterkante eine besonders starke Verklebung gewählt wird, so dass die Zackenhinterkante zusammen mit dem Materialstreifen faktisch eine formstabile Einheit bildet.

Gemäß einer Ausführungsform wird vorgeschlagen, dass vor dem Anordnen der Zackenhinterkante mit ihrem Befestigungsabschnitt auf der Oberfläche des Rotorblattes, also auf der Saugseite bzw. im alternativen Fall auf der Druckseite, eine Stufe dort in die Oberfläche eingearbeitet wird. Eine solche Stufe kann beispielsweise eingefräst werden und die Zackenhinterkante kann dort eingeklebt werden. Zusätzlich bzw. alternativ zu einer Fräsung der Stufe kann die Stufe beispielsweise durch einen Rücksprung in der Form bei der Herstellung des Rotorblattes erreicht werden. Dies hätte den Vorteil, dass ein Fräsen nicht mehr benötigt wird. Dadurch kann eine Stufe zwischen Zackenhinterkante und Oberfläche reduziert oder sogar vollständig vermieden werden. Das Einfräsen einer solchen Stufe ist vergleichsweise aufwändig, jedenfalls für das Nachrüsten, kann aber durch den erreichbaren Effekt dennoch vorteilhaft sein, insbesondere kann der Aufwand hierfür gerechtfertigt sein. Der Gesamtaufwand hierfür ist dennoch vergleichsweise gering, weil nur eine Stufe vorgesehen wird, also nur an einer Seite eingefräst werden muss.

Vorzugsweise wird für den Klebstoff oder das Doppelklebeband ein Acrylat-Klebstoff verwendet. Dies gilt sowohl für die unmittelbare Befestigung zwischen Zackenhinterkante und Blattoberfläche als auch die Befestigung des Materialstreifens am Rotorblatt bzw. an der Zackenhinterkante. Hierdurch kann ein vergleichsweise einfach beschaffener Klebstoff verwendet werden und es kann auf Erfahrungen mit der Verarbeitung eines solchen Klebstoffs zurückgegriffen werden. Für den Einsatz an Rotorblättern, besonders wenn diese aus Faserverbundwerkstoff wie Glasfaserverbundwerkstoff gefertigt sind, ist dieser Klebstoff gut angepasst und es liegen Erfahrungswerte seiner Haltbarkeit vor.

Alternativ zu einem Acrylat-Klebstoff können Polyurethane oder Epoxidklebstoffe verwendet werden (wie beispielsweise Kleberharz Typ g, S 25, V10). Ferner kann ebenfalls ein Laminierharz als Klebstoff verwendet werden.

Erfindungsgemäß wird zudem ein Rotorblatt vorgeschlagen, das eine Zackenhinterkante aufweist, die gemäß einem Verfahren wenigstens einer der oben beschriebenen Ausführungsformen an dem Rotorblatt angeordnet ist. Außerdem weist das Rotorblatt eine Zackenhinterkante auf, die wenigstens einen Teil eines Blitzschutzsystems bildet. Eine solche Zackenhinterkante kann somit eine Doppelfunktion ausführen, nämlich die Strömungseigenschaften des Rotorblattes zu verbessern und außerdem einen Teil eines Blitzschutzes bereitzustellen, oder ein Blitzschutzsystem zu ergänzen, oder ein Blitzschutzsystem auszubessern, besonders wenn bereits ein Blitz in das bisherige Blitzschutzsystem eingeschlagen hatte. Vorzugsweise wird eine Zackenhinterkante vorgeschlagen, die ganz oder teilweise aus Metall gefertigt ist und außerdem oder alternativ eine elektrische Leitung zum Leiten elektrischen Stroms im Falle eines Blitzschlags aufweist. Auf diese Art und Weise kann die Eignung der Zackenhinterkante als Blitzschutz oder Teil eines Blitzschutzes realisiert werden.

Gemäß einer Ausführungsform ist die Zackenhinterkante zum Ableiten eines elektrischen Stroms im Falle eines Blitzschlags vorbereitet. Dazu ist eine elektrische Verbindung von der Zackenhinterkante zu einer vorbereiteten Blitzeinschlagstelle im Rotorblatt vorhanden. Eine solche Blitzeinschlagstelle kann insbesondere eine metallische Spitze des Rotorblattes sein. Es können aber auch andere Einschlagpunkte am Rotorblatt vorgesehen und elektrisch mit der Zackenhinterkante verbunden sein.

Außerdem oder alternativ wird eine elektrische Verbindung von der Zackenhinterkante zu einem Blattwurzelbereich des Rotorblattes vorgeschlagen, um den elektrischen Strom im Falle des Blitzschlags hierüber weiterzuleiten, um ihn schließlich zur Erde zu leiten. Vom Wurzelbereich des Rotorblattes aus sind dann Mittel vorgesehen, um den Strom auch über die drehenden Verbindungen (Blattverstellung, Generator und Azimutverstellung) weiterzuleiten.

Erfindungsgemäß wird zudem eine Windenergieanlage vorgeschlagen, die wenigstens ein Rotorblatt gemäß wenigstens einer der obigen Ausführungsformen aufweist.

Nachfolgend wird die Erfindung anhand von Ausführungsformen exemplarisch unter Bezugnahme auf die begleitenden Figuren näher erläutert.
- Fig. 1: zeigt eine Windenergieanlage in einer perspektivischen Darstellung.
- Fig. 2: zeigt eine Möglichkeit eine Zackenhinterkante an einem Rotorblatt nachzurüsten schematisch in einer seitlichen Schnittansicht.
- Fig. 3: zeigt eine weitere Möglichkeit eine Zackenhinterkante an einem Rotorblatt nachzurüsten in einer schematischen Schnittansicht.
- Fig. 4: zeigt eine erfindungsgemäß nachgerüstete Zackenhinterkante in einer seitlichen Schnittansicht schematisch.
- Fig. 5: zeigt die nachgerüstete Zackenhinterkante gemäß Fig. 4 in einer perspektivischen Darstellung.
- Fig. 6: zeigt eine schematische Schnittansicht einer Zackenhinterkante, die nicht zur Erfindung gehört.

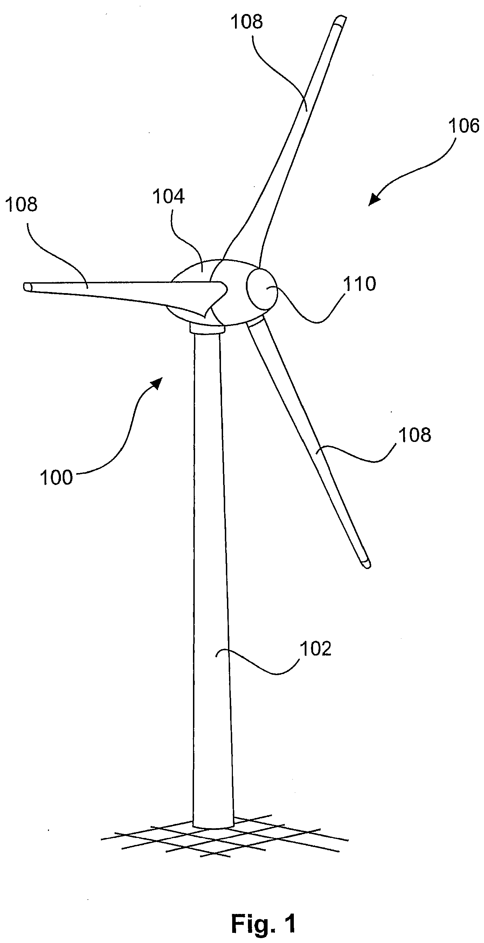

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

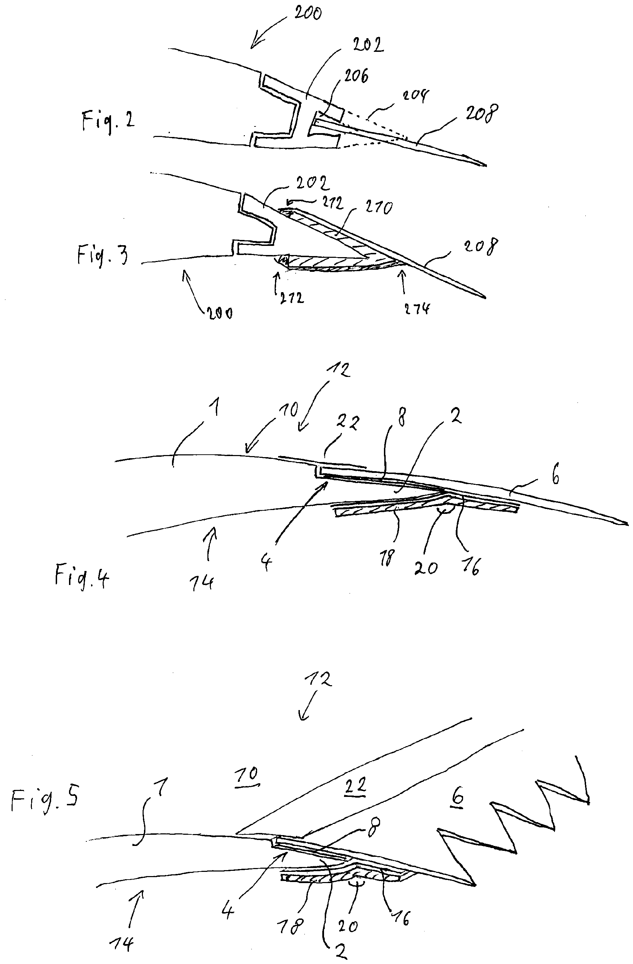

Fig. 2 zeigt einen hinteren Teil eines Rotorblattes 200 mit einer angesetzten Hinterkante 202. Die Fig. 2 und im Übrigen auch die Fig. 3 und 4 zeigen seitliche Schnittansichten, wobei der besseren Übersichtlichkeit halber nicht alle Schnittflächen schraffiert gezeigt sind. Die Hinterkante 202 lief ursprünglich spitz zu, wie die gestrichelten Linien 204 noch andeuten sollen. Die Hinterkante 202 verfügte auch über einen inneren Hohlraum 206. Zum Befestigen einer Zackenhinterkante 208 ist die angesetzte Hinterkante 202 aufgesägt worden, so dass der Hohlraum 206 zugänglich wurde. Die Zackenhinterkante 208 konnte somit in den Hohlraum 206 eingesetzt und dort befestigt werden.

Fig. 3 zeigt eine Variante, bei der an dem Rotorblatt 200 eine Hinterkante 202 ohne Hohlraum angesetzt ist. Eine nachträgliche Befestigung der Zackenhinterkante 208 kann daher nicht wie in Fig. 2 gezeigt vorgenommen werden. Eine Möglichkeit besteht darin, ein V-förmiges Profil 210 als Träger für die Zackenhinterkante 208 zu verwenden. Alternativ kann die Zackenhinterkante 208 selbst ein solches V-förmiges Profil aufweisen, bilden oder beinhalten.

Durch dieses V-förmige Profil 210 kann die Zackenhinterkante 208 auf die Hinterkante 202 aufgesetzt werden. Um eine zu kantige Stufe zur Hinterkante 202 zu vermeiden, kann dort in dem Übergang 212 angespachtelt werden. Eine Anspachtelung kann auch am Übergang 214 zur Zackenhinterkante 208 hin erfolgen.

Eine solche Art der Nachrüstung gemäß Fig. 3 kann aber aufwändig sein und erfindungsgemäß wird die Lösung gemäß Fig. 4 und Fig. 5 vorgeschlagen. An dem Rotorblatt 1, von dem nur sein hinterer Teil dargestellt ist, wird im Bereich der Hinterkante 2, die auch als Blatthinterkante bezeichnet wird, optional die Ausnehmung 4 als Stufe eingefräst.

Alternativ dazu kann die Ausnehmung bzw. die Stufe durch einen Rücksprung in der Form erzeugt werden, welche zur Herstellung des Rotorblattes verwendet wird. Damit müsste die Stufe bzw. die Ausnehmung nicht mehr nachbearbeitet bzw. gefräst werden. Auf diese Ausnehmung 4 kann zur Vereinfachung und damit auch Beschleunigung des Verfahrens des Nachrüstens auch verzichtet werden. Die Zackenhinterkante 6 wird nun in diese Ausnehmung 4 eingesetzt und mit dem ersten Doppelklebeband 8 festgeklebt. Ohne Ausnehmung 4 könnte die Zackenhinterkante 6 stattdessen auf die Oberfläche 10 des Rotorblattes 1 unmittelbar aufgeklebt werden, was zumindest gemäß einer Ausführungsform auch vorgeschlagen wird. Die Oberfläche 10 ist in dieser gezeigten Ausführungsform der Fig. 4 und der Fig. 5 die Saugseite 12 des Rotorblattes 1 und entsprechend ist auf der anderen Seite des Rotorblattes 1 die Druckseite 14.

Zur weiteren Fixierung der Zackenhinterkante 6 ist nun ein zweites Doppelklebeband 16 vorhanden. Dieses wird überlappend auf das Rotorblatt 1 an seiner Druckseite 14 und die Zackenhinterkante 6 aufgeklebt. Zur weiteren Fixierung und Stabilisierung ist der Materialstreifen 18 vorgesehen, der im Grunde auf das zweite Doppelklebeband 16 aufgeklebt ist und somit auch die Druckseite 14 des Rotorblattes 1 und die Zackenhinterkante 6 an derselben Seite verbindet. Der Materialstreifen 18 und das zweite Doppelklebeband 16 können auch als ein gemeinsames Element ausgebildet sein, z.B. als entsprechend verstärkter Klebestreifen.

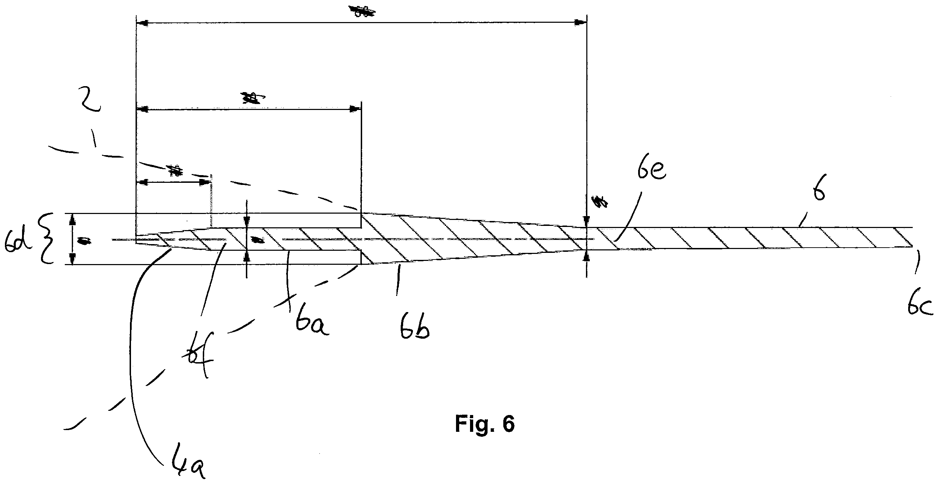

Fig. 6 zeigt eine schematische Schnittansicht einer Zackenhinterkante, die nicht zur Erfindung gehört.

Die Zackenhinterkante 6 weist ein erstes Ende 6a und ein zweites Ende 6c auf. Im Bereich des zweiten Endes 6c sind die Zacken vorgesehen. Das erste Ende 6a dient dazu, in oder an der Hinterkante des Rotorblattes befestigt zu werden. Die Zackenhinterkante 6 weist in ihrem mittleren Bereich und zum zweiten Ende 2c hin eine erste Dicke 6e auf. Die Zackenhinterkante 6 weist ferner eine Aufdickung 6b an einem Hinterkantenkamm auf. Die Aufdickung 6b weist eine zweite Dicke 6d auf, welche größer ist als die erste Dicke 6e. Zum ersten Ende 6a hin, d.h. zu demjenigen Ende, welches in oder an der Hinterkante des Rotorblattes befestigt wird, ist optional eine Stufe vorgesehen, so dass die Dicke 6f des ersten Endes 6a der Zackenhinterkante 6 kleiner ist als die zweite Dicke 6d. Zum ersten Ende 6a hin kann sich die Zackenhinterkante verjüngen. Optional kann das erste Ende 6a bis zu der Stelle, an der die Stufe vorhanden ist, in eine Ausnehmung 4a in einer Hinterkante 2 des Rotorblattes eingeführt werden. In der Hinterkante 2 kann eine Ausnehmung 4a vorgesehen sein, in welche das erste Ende 6a der Zackenhinterkante 6 eingeführt werden kann, um dort befestigt zu werden. Dies kann wie bereits oben beschrieben durch eine Klebung erfolgen.

Die Zackenhinterkante kann optional als Teil eines Blitzschutzsystems des Rotorblattes ausgestaltet sein. Dazu kann die Zackenhinterkante ganz oder teilweise aus Metall gefertigt sein und/oder kann eine elektrische Leitung zum Leiten elektrischen Stroms im Falle eines Blitzschlags aufweisen.

Vorzugsweise ist der Materialstreifen 18 wie dargestellt ein starres Profil, das den gezeigten Winkel 20 als starren Winkel aufweist. Der Materialstreifen 18 mit dem zweiten Doppelklebeband 16 kann zudem ein Laminieren an dieser Stelle ersetzen oder teilweise ersetzen.

Als eine ergänzende Maßnahme zeigen Fig. 4 und Fig. 5 einen unterstützenden Klebestreifen 22, der eine zusätzliche Fixierung erreichen kann. Auch dieser Klebestreifen 22 kann ein Laminieren an dieser Stelle ersetzen oder zumindest teilweise ersetzen. Vorzugsweise wird dieser Klebestreifen 22 an der Stelle auch dann vorgesehen, wenn keine Ausnehmung 4 vorgesehen ist und sich vielmehr eine Stufe an der Stelle zwischen der Zackenhinterkante 6 und der Oberfläche 10 ergibt, die durch diesen unterstützenden Klebestreifen 22 ausgeglichen werden kann und dadurch ein Laminieren zumindest teilweise ersetzt.

## Patentansprüche

1. Verfahren zum Anbringen einer Zackenhinterkante (6) an einer Blatthinterkante (2) eines eine Druckseite (14) und eine Saugseite (12) aufweisenden Rotorblattes (1) einer Windenergieanlage, umfassend die Schritte:
- Anordnen der Zackenhinterkante (6) mit einem Befestigungsabschnitt an einer Oberfläche (10) der Blatthinterkante (2) und
- Befestigen der Zackenhinterkante (6) im Bereich des Befestigungsabschnitts an dem Rotorblatt (1) mittels Klebstoff,
- wobei die Zackenhinterkante (6) an der Saugseite (12) angeordnet wird und zusätzlich durch Anbringen eines überdeckenden formstabilen Materialstreifens (18) an der Druckseite (14) fixiert wird, und
- der formstabile Materialstreifen (18) so an der Druckseite (14) und der Zackenhinterkante (6) angeordnet wird, dass er einen Übergang zwischen Blatthinterkante (2) und Zackenhinterkante (6) vollständig überdeckt, oder
- wobei die Zackenhinterkante (6) an der Druckseite (14) angeordnet wird und zusätzlich durch Anbringen eines überdeckenden formstabilen Materialstreifens (18) an der Saugseite (12) fixiert wird, und
- der formstabile Materialstreifen (18) so an der Saugseite (12) und der Zackenhinterkante (6) angeordnet wird, dass er einen Übergang zwischen Blatthinterkante (2) und Zackenhinterkante (6) vollständig überdeckt.

2. Verfahren nach Anspruch 1,
**dadurch gekennzeichnet, dass** die Zackenhinterkante (6) an der Blattoberfläche (10) der Blatthinterkante (2) mittels Doppelklebeband (8) zwischen der Zackenhinterkante (6) und der Blattoberfläche (10) befestigt wird.

3. Verfahren nach Anspruch 1 oder 2,
**dadurch gekennzeichnet, dass** der Materialstreifen (18) als Kunststoffprofil ausgebildet ist.

4. Verfahren nach einem der vorstehenden Ansprüche,
**dadurch gekennzeichnet, dass** der Materialstreifen (18) mittels Klebstoff, insbesondere Doppelklebeband (16), den Übergang zwischen Blatthinterkante (2) und Zackenhinterkante (6) überdeckend aufgeklebt ist oder mittels Spachtelmasse aufgespachtelt ist.

5. Verfahren nach einem der vorstehenden Ansprüche,
**dadurch gekennzeichnet, dass** sich die Befestigung, insbesondere Verklebung des Materialstreifens (18) an dem Rotorblatt (1) zu der Befestigung des Materialstreifens an der Zackenhinterkante (6) unterscheidet, insbesondere dass unterschiedliche Klebstoffe verwendet werden.

6. Verfahren nach einem der vorstehenden Ansprüche,
**dadurch gekennzeichnet, dass** vor dem Anordnen der Zackenhinterkante (6) mit ihrem Befestigungsabschnitt auf der Oberfläche (10) eine Stufe in die Oberfläche (10) vorgesehen ist, insbesondere eingefräst ist und die Zackenhinterkante (6) mit ihrem Befestigungsabschnitt in diese Stufe eingesetzt wird.

7. Verfahren nach einem der vorstehenden Ansprüche,
**dadurch gekennzeichnet, dass**
- der Klebstoff und/oder das Doppelklebeband (8) zum Befestigen der Zackenhinterkante (6) und/oder
- der Klebstoff, das Doppelklebeband (16) und/oder die Spachtelmasse zum Befestigen des Materialstreifens (18) im Übergang zwischen Blatthinterkante (2) und Zackenhinterkante (6)
ein Acrylat-Klebstoff, ein Polyurethan-Klebstoff, ein Epoxidklebstoff oder ein Laminierharz ist, aufweist oder beinhaltet.

8. Rotorblatt (1) einer Windenergieanlage, mit einer Druckseite (14), einer Saugseite (12) und einer Blatthinterkante (2), wobei an der Blatthinterkante (2) eine Zackenhinterkante (6) angeordnet ist und
- die Zackenhinterkante (6) wenigstens einen Teil eines Blitzschutzsystems bildet und
- die Zackenhinterkante (6) nach einem Verfahren gemäß einem der vorstehenden Ansprüche an dem Rotorblatt (1) angeordnet ist.

9. Rotorblatt (1) nach Anspruch 8,
**dadurch gekennzeichnet, dass** die Zackenhinterkante (6) ganz oder teilweise aus Metall gefertigt ist und/oder eine elektrische Leitung zum Leiten elektrischen Stromes im Falle eines Blitzeinschlags aufweist.

10. Rotorblatt nach Anspruch 8 oder 9,
**dadurch gekennzeichnet, dass** die Zackenhinterkante (6) zum Ableiten eines elektrischen Stroms im Falle eines Blitzschlags
- eine elektrische Verbindung zu einer vorbereiteten Blitzeinschlagstelle im Rotorblatt (1), insbesondere zu einer metallischen Spitze des Rotorblattes (1) aufweist, um einen elektrischen Strom im Falle eines Blitzschlags von der vorbereiteten Blitzeinschlagstelle abzuleiten und/oder
- eine elektrische Verbindung zu einem Blattwurzelbereich des Rotorblattes (1) ausweist, um einen elektrischen Strom im Falle eines Blitzschlags zum weiteren Ableiten zum Blattwurzelbereich zu führen.

11. Windenergieanlage mit
- einem Rotorblatt (1) nach einem der Ansprüche 8 bis 10.

## Claims

1. Method for applying a serrated rear edge (6) to a blade rear edge (2) of a rotor blade (1) of a wind turbine that has a pressure side (14) and a suction side (12), comprising the steps:
- disposing the serrated rear edge (6), with an attaching portion, on a surface (10) of the blade rear edge (10), and
- attaching the serrated rear edge (6), in the region of the attaching portion, to the rotor blade (1) by means of adhesive,
- the serrated rear edge (6) being disposed on the suction side (12) and being additionally fixed by application of an overlapping dimensionally stable material strip (18) to the pressure side (14), and
- the dimensionally stable material strip (18) being disposed on the pressure side (14) and on the serrated rear edge (6) such that it completely overlaps a transition between the blade rear edge (2) and the serrated rear edge (6), or
- the serrated rear edge (6) being disposed on the pressure side (14) and additionally fixed by application of an overlapping dimensionally stable material strip (18) to the suction side (12), and
- the dimensionally stable material strip (18) being disposed on the suction side (12) and on the serrated rear edge (6) such that it completely overlaps a transition between the blade rear edge (2) and the serrated rear edge (6).

2. Method according to Claim 1,
**characterized in that** serrated rear edge (6) is attached to the blade surface (10) of the blade rear edge (2) by means of double-sided adhesive tape (8), between the serrated rear edge (6) and the blade surface (10).

3. Method according to Claim 1 or 2,
**characterized in that** the material strip (18) is realized as a plastic profile.

4. Method according to any one of the preceding claims,
**characterized in that** the material strip (18) is stuck on by means of adhesive, in particular double-sided adhesive tape (16), overlapping the transition between the blade rear edge (2) and the serrated rear edge (6), or is applied by means of filler compound.

5. Method according to any one of the preceding claims,
**characterized in that** the attachment, in particular adhesive bonding, of the material strip (18) to the rotor blade (1) differs from the attachment of the material strip to the serrated rear edge (6), in particular **in that** differing adhesives are used.

6. Method according to any one of the preceding claims,
**characterized in that**, before the serrated rear edge (6) is disposed with its attaching portion on the surface (10), a shoulder is provided in the surface (10), in particular is milled-in, and the serrated rear edge (6) is inserted with its attaching portion in this shoulder.

7. Method according to any one of the preceding claims,
**characterized in that**
- the adhesive and/or the double-sided adhesive tape (8) for attaching the serrated rear edge (6) and/or
- the adhesive, the double-sided adhesive tape (16) and/or the filler compound for attaching the material strip (18) in the transition between the blade rear edge (2) and the serrated rear edge (6)
has or includes an acrylate adhesive, a polyurethane adhesive, an epoxy adhesive or a laminating resin.

8. Rotor blade (1) of a wind turbine, having a pressure side (14), a suction side (12) and a blade rear edge (2), a serrated rear edge (6) being disposed at the blade rear edge (2), and
- the serrated rear edge (6) constituting at least a part of a lightning protection system, and
- the serrated rear edge (6) being disposed, according to a method according to any one of the preceding claims, on the rotor blade (1).

9. Rotor blade (1) according to Claim 8,
**characterized in that** the serrated rear edge (6) is made entirely or partially of metal, and/or has an electric line for conducting electric current in the event of a lightning strike.

10. Rotor blade according to Claim 8 or 9,
**characterized in that** that the serrated rear edge (6), for the purpose of deflecting an electric current in the event of a lightning strike,
- has an electrical connection to a prepared lightning strike point in the rotor blade (1), in particular to a metallic tip of the rotor blade (1), in order to divert an electric current, in the event of a lightning strike, from the prepared lightning strike point, and/or
- has an electrical connection to a blade root region of the rotor blade (1), in order to guide an electric current, in the even of a lightning strike, for the purpose of further deflection to the blade root region.

11. Wind turbine, having
- a rotor blade (1) according to any one of Claims 8 to 10.

## Revendications

1. Procédé de montage d'un bord de fuite dentelé (6) sur un bord de fuite de pale (2) d'une pale de rotor (1) présentant un intrados (14) et un extrados (12) d'une éolienne, comprenant les étapes :
- l'agencement du bord de fuite dentelé (6) avec une section de fixation au niveau d'une surface (10) du bord de fuite de pale (2) et
- la fixation du bord de fuite dentelé (6) dans la zone de la section de fixation à la pale de rotor (1) au moyen de colle,
- dans lequel le bord de fuite dentelé (6) est agencé au niveau de l'extrados (12) et est fixé en outre par montage d'une bande de matériau (18) recouvrante de forme stable à l'intrados (14), et
- la bande de matériau (18) de forme stable est agencée au niveau de l'intrados (14) et du bord de fuite dentelé (6) de sorte qu'elle recouvre complètement une transition entre le bord de fuite de pale (2) et le bord de fuite dentelé (6), ou
- dans lequel le bord de fuite dentelé (6) est agencé au niveau de l'intrados (14) et est fixé en outre par montage d'une bande de matériau (18) recouvrante de forme stable à l'extrados (12), et
- la bande de matériau (18) de forme stable est agencée au niveau de l'extrados (12) et du bord de fuite dentelé (6) de sorte qu'elle recouvre complètement une transition entre le bord de fuite de pale (2) et le bord de fuite dentelé (6).

2. Procédé selon la revendication 1,
**caractérisé en ce que** le bord de fuite dentelé (6) est fixé à la surface de pale (10) du bord de fuite de pale (2) au moyen d'une bande adhésive double face (8) entre le bord de fuite dentelé (6) et la surface de pale (10).

3. Procédé selon la revendication 1 ou 2, **caractérisé en ce que** la bande de matériau (18) est réalisée comme profil en matière plastique.

4. Procédé selon l'une des revendications précédentes,
**caractérisé en ce que** la bande de matériau (18) est collée en recouvrant au moyen de la colle, en particulier de la bande adhésive double face (16), la transition entre le bord de fuite de pale (2) et le bord de fuite dentelé (6) ou est appliquée au moyen de mastic.

5. Procédé selon l'une des revendications précédentes,
**caractérisé en ce que** la fixation, en particulier le collage de la bande de matériau (18) à la pale de rotor (1) se distingue de la fixation de la bande de matériau au bord de fuite dentelé (6), en particulier **en ce que** différentes colles sont utilisées.

6. Procédé selon l'une des revendications précédentes,
**caractérisé en ce qu'**avant l'agencement du bord de fuite dentelé (6) avec sa section de fixation sur la surface (10) un étage est prévu dans la surface (10), en particulier est fraisé et le bord de fuite dentelé (6) est inséré avec sa section de fixation dans cet étage.

7. Procédé selon l'une des revendications précédentes,
**caractérisé en ce que**
- la colle et/ou la bande adhésive double face (8) pour la fixation du bord de fuite dentelé (6) et/ou
- la colle, la bande adhésive double face (16) et/ou le mastic pour la fixation de la bande de matériau (18) dans la transition entre le bord de fuite de pale (2) et le bord de fuite dentelé (6)
est, présente ou contient une colle d'acrylate, une colle de polyuréthane, une colle époxy ou une résine pour stratifiés.

8. Pale de rotor (1) d'une éolienne, avec un intrados (14), un extrados (12) et un bord de fuite de pale (2), dans laquelle un bord de fuite dentelé (6) est agencé au niveau du bord de fuite de pale (2) et
- le bord de fuite dentelé (6) forme au moins une partie d'un système de protection contre la foudre et
- le bord de fuite dentelé (6) est agencé selon un procédé selon l'une des revendications précédentes au niveau de la pale de rotor (1).

9. Pale de rotor (1) selon la revendication 8, **caractérisée en ce que** le bord de fuite dentelé (6) est fabriqué entièrement ou partiellement en métal et/ou présente un câble électrique pour la conduite d'un courant électrique dans le cas d'un coup de foudre.

10. Pale de rotor selon la revendication 8 ou 9, **caractérisée en ce que** le bord de fuite dentelé (6) pour le transport d'un courant électrique dans le cas d'un coup de foudre,
- présente une liaison électrique avec un point de coup de foudre préparé dans la pale de rotor (1), en particulier avec une pointe métallique de la pale de rotor (1) afin de transporter un courant électrique dans le cas d'un coup de foudre du point de coup de foudre préparé et/ou
- une liaison électrique avec une zone de pied de pale de la pale de rotor (1) afin de mener un courant électrique dans le cas d'un coup de foudre pour la suite du transport à la zone de pied de pale.

11. Eolienne avec
- une pale de rotor (1) selon l'une des revendications 8 à 10.
